# EUROPEAN PATENT SPECIFICATION

(11) **EP 2 591 684 B1**
(45) Date of publication and mention of the grant of the patent: **20.04.2016**
(21) Application number: 11803683.9
(22) Date of filing: 08.07.2011
(51) Int. Cl.: A23L 27/00, A23L 2/52, A23L 2/54

(54) **CARBONATED DRINKS CONTAINING CAFFEINE**
KOFFEINENTHALTENDE KOHLENSÄUREHALTIGE GETRÄNKE
BOISSONS GAZEUSES CONTENANT DE LA CAFÉINE

(30) Priority: 09.07.2010 JP 2010156871
(43) Date of publication of application: 15.05.2013
(73) Proprietor: Suntory Beverage & Food Limited, Chuo-ku, Tokyo 104-0031 (JP)
(72) Inventor: TAKAHASHI, Mizuho, Kawasaki-shi, Kanagawa 211-0067 (JP); FUJIWARA, Masaru, Kawasaki-shi, Kanagawa 211-0067 (JP); YABUKI, Hayashi, Kawasaki-shi, Kanagawa 211-0067 (JP)
(74) Representative: Vossius & Partner Patentanwälte Rechtsanwälte mbB
(86) International application number: PCT/JP2011/065686
(87) International publication number: WO 2012/005349

(56) References cited:
- CN-A- 101 548 769
- JP-A- 2008 056 572
- JP-A- 2010 068 749
- JP-A- 2011 103 858
- US-A1- 2005 019 427
- US-A1- 2005 037 091
- US-A1- 2008 226 804
- Anonymous: "Calorie Burning Soft Drink Product Description", MINTEL-Database, 1 April 2010 (2010-04-01), pages 1-3, XP055102281, Retrieved from the Internet: URL:www.gnpd.com [retrieved on 2014-02-14]
- Anonymous ET AL: "Pressure in a Can of Soda", http:77hypertextbook.com, 1 January 2000 (2000-01-01), pages 1-2, XP055102240, Retrieved from the Internet: URL:http://hypertextbook.com/facts/2000/Se emaMeraj.shtml [retrieved on 2014-02-14]

## Description

### TECHNICAL FIELD

The present invention relates to low-calorie carbonated drinks containing caffeine.

### BACKGROUND ART

With the recent increase in the number of health-conscious people, the sale of products has increased that use high-intensity sweeteners such as aspartame, stevia, acesulfame K, and sucralose. High-intensity sweeteners are from several to several thousand times as sweet as sucrose and find use as diet sweeteners and the like in a lot of applications (such as restriction of calorie intake by obese people and suppression of increase in blood sugar levels due to such diseases as diabetes mellitus) so that they may be described as "low-calorie sweeteners." On the other hand, they have various defects including poor aftertaste such as the less sharp aftertaste due to the persistence of sweetness and the off-flavor or bitterness peculiar to high-intensity sweeteners that remains in the aftertaste, as well as the lack of body feel (also called richness, massiveness, or thickness.) In addition to that poor quality of sweetness (poor aftertaste and the lack of body feel), it has been particularly pointed out with carbonated drinks incorporating high-intensity sweeteners that, compared to the case where sucrose is used, carbon dioxide is lost soon enough after they are opened and the refreshing feel derived from the dissolved carbon dioxide is impaired and their palatability decreases prematurely.

Under these circumstances, a variety of foods and drinks have been proposed that are enhanced in palatability. For example, Patent Document 1 discloses that caffeine and the like are useful as agents to mask the sweetness of high-intensity sweeteners. However, caffeine inherently has bitterness and its bitterness is known to become particularly noticeable in carbonated drinks (Patent Document 2). According to the disclosure of Patent Document 3, the carbonic acid feel of carbonated drinks containing high-intensity sweeteners can be improved by incorporating a natural gum substance that is soluble in cold water. Further, Patent Document 4 discloses a carbonic acid feel enhancer characterized in that a pungent component such as a ginger extract containing 6-gingerol, 6-shogaol and the like is added at a concentration ranging from a tenth of the threshold of pungency to less than that threshold.
Patent Document 5 relates to a composition for human consumption, comprising caffeine, Guaranà caffeine, Yerba Mate, Eleutherococcus senticous, Panax ginseng, ginger, Glycyrrhiza glabra, ginkgo biloba and fructose.
Document 6 is a product description of Aspire calorie burning soft drink which contains natural ingredients such as guarana extract, green tea extract and L-carnithine.

### CITATION LIST

### PATENT LITERATAURE

Patent Document 1: JP Hei 9-238641A
Patent Document 2: Japanese Patent No. 2933496
Patent Document 3: JP Hei 5-41222 B
Patent Document 4: JP 2010-68749 A
Patent Document 5: US 2005/0019427
Patent Document 6: Product description of Aspire Calorie Burning Soft Drink

### SUMMARY OF INVENTION

### TECHNICAL PROBLEM

If the bitterness of caffeine is strong at a certain extent, it imparts an appropriate dry feel; but if it is too strong, a less drinkable product will result. In caffeine-loaded carbonated drinks, their bitterness combines with the stimulating effect of carbonic acid to become marked, and particularly in the case of low-calorie carbonated drinks which are insufficient in their own richness and robustness, the bitterness is perceived even more markedly.

An object of the present invention is to provide carbonated drinks using caffeine that have an appropriate dry feel while maintaining the characteristics of low-calorie drinks and which are suppressed in the bitterness of caffeine.

### SOLUTION TO PROBLEM

The present inventors conducted intensive studies with a view to solving the aforementioned problems, and found that by using specific amounts of caffeine and ginger extract in combination, the bitterness due to caffeine and carbonic acid could be suppressed without impairing the dry feel of caffeine. The present invention has been accomplished on the basis of this finding.

Thus, the present invention relates to the following.
1. A carbonated drink having a calorie content of no more than 84 kJ (20 kcal) per 100 mL, which is obtained by incorporating the following components (A) and (B):
   (A) caffeine in an amount of 0.005-0.06 wt%; and
   (B) ginger extract in an amount of 0.00001-10 wt%,
      wherein component (B) contains at least gingerol and the content of gingerol in the carbonated drink ranges from 0.00001 to 0.002 wt% and wherein the carbonated drink has a gas pressure of 147 - 490 kPa (1.5-5.0 kg/cm²).
2. The carbonated drink as recited in 1, wherein the content of gingerol in the carbonated drink ranges from 0.00002 to 0.0005 wt%.
3. The carbonated drink as recited in 1 or 2, which further contains a high-intensity sweetener.

### ADVANTAGEOUS EFFECTS OF INVENTION

According to the present invention which combines caffeine and ginger extract as incorporated in specific amounts, caffeine-containing carbonated drinks can be provided that are suppressed in bitterness without impairing the dry feel of caffeine and which hence have higher palatability. As a result, there can be provided low-calorie carbonated drinks that use high-intensity sweeteners and which have higher palatability featuring both a sharp, good clean flavor and the tendency to glide easily down the throat with refreshing feel.

### DESCRIPTION OF EMBODIMENTS

### (Caffeine)

Caffeine to be used in the present invention may be in various forms including purified products (with a caffeine content of 98.5% and higher) that can be used as food additives, partially purified products (with a caffeine content of 50 to less than 98.5%) that can be used as food, as well as extracts of caffeine-containing plants (e.g. tea leaves, cola cherry, coffee beans, and guarana) or concentrates thereof; in the drinks of the present invention, from the viewpoints of taste development and keeping quality such as resistance to precipitation, it is preferred to use purified or partially purified products of caffeine, and it is particularly preferred to use purified products of caffeine.

Caffeine, or component (A), is incorporated in the carbonated drink of the present invention in amounts ranging from 0.005 to 0.06 wt% (hereinafter designated simply as %), which is equivalent to 50-600 ppm. Preferably, component (A) is contained in amounts ranging from 0.005 to 0.03%, more preferably from 0.01 to 0.03%. If the content of component (A) is 0.005% and greater, dry feel can be imparted to carbonated drinks, especially low-calorie carbonated drinks containing high-intensity sweeteners. The term "dry feel" as used herein is commonly used to describe beers (e.gl "dry" beer) or liqueurs (e.g. "dry" liqueur) and refers to a sharp, good clean flavor; specifically, it refers to such a drink that it presents an appropriate bitter feel when drunk but subsequently presents an aftertaste of extremely clean flavor that has no lingering effects such as sweetness, pungency, and any other off-taste.

### (Ginger extract)

The ginger extracts to be used in the present invention include: liquid extract as obtained by extraction from dried forms of the rhizome of ginger (scientific name: *Zingiber officinale Roscoe* (*Zingiberaceae*)), or the rhizome of ginger with a suitable extraction solvent at a suitable temperature (e.g. cold or heated condition) in the usual manner, or its dilutions, concentrates, forms evaporated to dryness, etc.; ginger pressed to a liquid form; liquid extract as obtained by extraction from the pressed ginger in liquid form with a suitable extraction solvent at a suitable temperature (e.g. cold or heated condition) in the usual manner, or its dilutions, concentrates, forms evaporated to dryness, etc. The ginger extract of the present invention may be added to drinks in the form of a flavoring.

The ginger extract, or component (B), may typically be incorporated in the carbonated drink of the present invention in amounts that may vary depending on the type, form, etc. of the ginger extract to be used, and which typically range from 0.00001 to 10 wt% (hereinafter designated simply as %), which is equivalent to 0.1-100,000 ppm. For instance, if the ginger extract is to be incorporated in the form of a flavoring and the like, it is typically contained in the drink in amounts ranging from 0.001 to 10%, preferably from 0.002 to 5%, and more preferably from 0.005 to 5%.

One of the components that are effective in suppressing the bitterness due to caffeine and carbonic acid without impairing the dry feel of caffeine as an advantageous effect of the present invention is gingerol. It is preferred that at least gingerol be contained in component (B) of the present invention. Gingerol is typically incorporated in the carbonated drink of the present invention in amounts ranging from about 0.00001 to about 0.001% (= 0.1 to 10 ppm), preferably from about 0.00002 to about 0.0005% (= 0.2 to 5 ppm). The process for producing the ginger extract containing gingerol is not particularly limited but supercritical extraction (especially extraction with supercritical carbon dioxide) is preferred since it permits efficient extraction of gingerol. Extraction with supercritical carbon dioxide is a method in which ginger is steamed so that it is humidified to a moisture content of 15-30% and thereafter subjected to extraction with supercritical carbon dioxide being circulated at 50-80°C for 5-30 hours in a pressure vessel of 12-18 MPa (120-180 atm). If a gingerol-rich ginger extract as obtained by extraction with supercritical carbon dioxide is to be used in the carbonated drink of the present invention, it is typically incorporated in amounts ranging from about 0.001 to about 1%, preferably from about 0.002 to about 0.5%.

Ginger or an extract thereof is commonly known as a pungent component or a stimulating component but in the present invention, the ginger extract is used in order to suppress the bitterness of caffeine as well as for developing a dry feel. If the content of component (B) is less than 0.00001%, it is not effective in improving the bitterness of caffeine-containing carbonated drinks, especially the bitterness that is noticeable in low-calorie carbonated drinks containing high-intensity sweeteners nor is it possible to obtain the carbonic acid feel enhancing effect of the ginger extract; as a result, no carbonated drink is obtained that features both a sharp, good clean flavor and the tendency to glide easily down the throat with refreshing feel.

The weight proportions of caffeine (component (A)) and the ginger extract (component (B)) that are to be contained in the carbonated drink of the present invention are preferably such that the ratio of (B)/((A) + (B)) ranges from 0.14 to 1; from the viewpoint that the relative proportion of the bitter component caffeine can be reduced while maintaining the dry feel, the ratio of (B)/((A) + (B)) ranges more preferably from 0.2 to 1, and even more preferably from 0.4 to 1.

### (Carbonated drink)

The carbonated drink of the present invention is prepared by incorporating caffeine (component (A)) and the ginger extract (component (B)) in the aforementioned respective amounts ranging from 0.005 to 0.06% and from 0.00001 to 10%. The term "carbonated drink" as used herein refers to an aqueous solution of a sweetener which is optionally mixed with fruit juice, plant extracts, dairy products, flavorings, etc. , then charged with carbon dioxide under pressure and filled into a container.

The carbonated drink of the present invention is characterized in that in spite of its low calorie content, it features both a sharp, good clean flavor and the tendency to glide easily down the throat with refreshing feel. The term "low-calorie" drink as used herein refers to calorie-off drinks (with a calorie content of less than 84 kJ (20 kcal) per 100 mL of the drink) or non-caloric drinks (with a calorie content of less than 21 kJ (5 kcal) per 100 mL of the drink). Non-caloric drinks can exhibit the effects of the present invention in a more advantageous way and, hence, are one particularly preferred embodiment.

The calorie content in the drink is calculated in accordance with "On Analysis Methods, etc. for Nutrients, etc. Listed in the Nutrition Labeling Standards" as published in association with the Health Promotion Act. To be more specific, the determined amounts of the respective nutrients are multiplied by the associated energy conversion factors (17 kJ/g (4 kcal/g) for proteins; 38 kJ/g (9 kcal/g) for lipids; 17 kJ/g (4 kcal/g) for saccharides; 8 kJ/g (2 kcal/g) for dietary fiber; 29 kJ/g ( 7 kcal/g) for alcohols; 13 kJ/g (3 kcal/g) for organic acids) and the products are added up to give the total number of calories. For details, see "On Analysis Methods, etc. for Nutrients, etc. Listed in the Nutrition Labeling Standards."

To produce low-calorie carbonated drinks, high-intensity sweeteners are commonly used. The high-intensity sweeteners to be used in the present invention refer to sweeteners that are sweeter than sucrose (say, more than 100 times as sweet as sucrose). Either natural or synthetic sweeteners may be used as high-intensity sweeteners and they include, but are not limited to, the following: peptide sweeteners such as neotame and alitame; glycoside sweeteners such as stevia (including stevia extract, stevia derivatives such as enzymatically treated stevia, or stevia having glucose added thereto by enzymatic treatment, as well as rebaudioside A which has the best quality of sweetness among all the sweet components of stevia) and licorice extract; sucrose derivatives such as sucralose; synthetic sweeteners such as acesulfame K and saccharin. It should be noted that aspartame which is a peptide known as high-intensity sweetener is not conveniently included in the category of the "high-intensity sweetener" as referred to in the present invention.

In the present invention, the high-intensity sweeteners may be used either singly or in combination of two or more species. In particular, the action of improving the taste development of the carbonated drink of the present invention (imparting dry feel and suppressing the bitterness due to caffeine and carbonic acid) will be exhibited significantly if at least one species selected from among acesulfame K, sucralose, and stevia is used as the high-intensity sweetener. If acesulfame K and/or sucralose is used, richness (body feel) and robustness which tend to be insufficient in low-calorie drinks can be imparted and, hence, carbonated drinks using, as the high-intensity sweetener, at least one species selected from among acesulfame K, sucralose, and stevia, especially acesulfame K and/or sucralose, are one preferred embodiment of the present invention.

The proportion in which the high-intensity sweetener is to be incorporated in the carbonated drink of the present invention is not particularly limited and may be chosen as appropriate for the specific object of its incorporation. For instance, if acesulfame K and/or sucralose is used as the high-intensity sweetener, the amount of acesulfame K ranges from about 0.001 to about 0.1 g per 100 mL of the drink whereas that of sucralose ranges from about 0.0004 to about 0.45 g per 100 mL of the drink. In this connection, as will be described later, the carbonated drink of the present invention is also characterized by the ability to maintain the head retention of foam, so a carbonated drink of high gas pressure may be given as one advantageous embodiment of the present invention. The proportion of the high-intensity sweetener to be incorporated in the carbonated drink of high gas pressure is such that it presents a degree of sweetness in the range from about 8 to about 14, preferably from about 8 to about 12, and more preferably from about 9 to about 11. "Degree of sweetness" as used herein is a measure for the intensity of sweetness and also called sweetness intensity or sweetness ratio; it represents the factor by which certain sweetness is stronger than the sweetness of 1 wt% sucrose (20°C) which is taken as unity.

As already mentioned, high-intensity sweeteners have a peculiar poor aftertaste and impair a refreshing feel, so they lower the flavor and palatability of the carbonated drink. However, in the low-calorie carbonated drink of the present invention which incorporates caffeine and the ginger extract in the specified amounts, the development of undesirable taste owing to the high-intensity sweeteners, namely, the sweetness that persist as an aftertaste (i.e., after-sweetness), and the off-flavor or bitterness that are peculiar to high-intensity sweeteners and which are sensed as combined with the stimulation by carbonic acid are sufficiently suppressed to improve the palatability of the carbonated drink. In addition, the combined use of caffeine and the ginger extract improves the frothy feel of the carbonated drink (i.e., carbonic acid feel), thus contributing to providing both a sharp, good clean flavor and the tendency to glide easily down the throat with refreshing feel. It should be noted here that except in special cases, the term "froth" as used herein refers to foam that evolves in the drink.

The conventional carbonated drink of high gas pressure is supplied with carbon dioxide so that it will build up a pressure in the container within the range of from 147-490 kPa (1.5 to 5.0 kg/cm²)(preferably from 196-441 kPa (2.0 to 4.5 kg/cm²)); with this type of carbonated drink, the refreshing feel due to foam is sensed but the evolving foam is coarse and quickly disappears and, hence, it has not been completely satisfactory in terms of the refreshing stimulation which is required of carbonated drinks of high gas pressure. What is more, the conventional carbonated drink of high gas pressure has a stimulating and a carbonic acid taste that are too strong under high gas pressure, so it is commonly designed to contain an increased amount of sweetener (i.e., have a higher degree of sweetness) in order to ensure that the stimulation by carbonic acid will not become prominent; however, this in turn has posed various problems including the prominent sweetness due to the loss of frothy feel, the appreciable off-flavor and bitterness that are peculiar to high-intensity sweeteners, and the deterioration of flavor release. On the other hand, the carbonated drink of the present invention which incorporates caffeine and the ginger extract maintains the head retention of foam, so it has an advantage of sustained drinkability (refreshing stimulating feel, good balance between stimulation and sweetness, and flavor release with refreshing feel).

Except in special cases, the term "gas pressure" as used herein with respect to the carbonated drink of the present invention refers to the gas pressure within the container of the carbonated drink. Pressure measurement can be performed by any method that is well known to skilled artisans, for example, a method comprising the steps of adjusting a sample at 20°C, holding it in position in an internal gas pressure gage, opening the stopcock at the internal gas pressure gage to let out the gas, closing the stopcock so that the indicator on the internal gas pressure gage will swing, and reading the value at which the indicator comes to standstill; alternatively, a commercial internal gas pressure gage (say, the gas volume analyzer GVA-500A of KYOTO ELECTRONICS MANUFACTURING CO., LTD.) may be employed.

As mentioned above, the carbonated drink of the present invention has an outstanding flavor release (creation and strength of a flavor), so it is preferred that in addition to caffeine (A), ginger extract (B), and high-intensity sweetener (C), the carbonated drink also contains a flavoring (D), because the action of the flavoring can be fully exhibited.

In addition to the aforementioned components (A) to (D), various other components that are usually incorporated in carbonated drinks, say, acidulants, pH modifiers, fruit juice components, antioxidants, and preservatives, may optionally be added to an extent that will not impair the effects of the present invention.

### EXAMPLES

On the following pages, the present invention is described in greater detail by means of examples, to which the invention is in no way limited.

### <Test method >

In the following examples, gingerol and caffeine were quantified by passing a sample drink through a membrane filter (cellulose acetate of ADVANTEC; 0.45 µm) and injecting the filtrate into HPLC. The conditions for the measurement were as follows.

### (Conditions for measurement by HPLC)

- Column: TSK-gel ODS-80 TsQA (4.6 mmφ x 150 mm; TOSOH CORPORATION)
- Mobile phase:
   A; water/trifluoroacetic acid = 100/0.5
   B; acetonitrile/trifluoroacetic acid = 1000/0.5
- Flow rate: 1.0 mL/min
- Column temperature: 40°C
- Gradient conditions:
   From start of analysis until 5 min later, held at A/B = 95/5
   From 5 to 20 min, changed to A/B = 5/95
   From 20 to 25 min, held at A/B = 5/95
   From 25 to 26 min, changed to A/B = 95/5
   From 26 to 30 min, held at A/B = 95/5
- Injection volume: 5.0 µL
- Detection wavelength: 280 nm
- Standard substances:
   Gingerol (nakalai tesque)
   Anhydrous caffeine (nakalai tesque)
- Retention time:
   10.7 min for caffeine, and 16.6 min for gingerol

### Example 1: Preparation of gingerol-containing carbonated drink (1)

According to the recipe indicated in Table 1, citric acid (anhydrous), trisodium citrate, high-intensity sweeteners (sucralose and acesulfame K), and anhydrous caffeine were mixed and, after adding an aqueous solution of gingerol, carbonated water of high gas pressure was further added to prepare samples of non-caloric carbonated drink having a pH of 3.3 (after degassing) and a gas pressure of 343 kPa (3.5 kg/cm²) (as calculated for 20°C). The gingerol content in the prepared samples of carbonated drink (Nos. 1 to 4) was 0, 0.5, 1.0, and 2.0 ppm. After being cooled to 5°C, the samples of carbonated drink were subjected to sensory evaluation by professional panelists. The evaluation was conducted for the strength of bitterness due to caffeine and carbonic acid (point 3, too bitter and hence unsuitable for drinking; point 2, somewhat bitter but drinkable; point 1, weak bitterness sensed; point 0, no bitterness) and the sharpness of aftertaste (point 3, sharp and clean flavor; point 2, slight sweetness or bitterness or off-flavor remaining in the aftertaste; point 1, some sweetness or off-flavor remaining in the aftertaste; point 0, strong sweetness or bitterness or off-flavor remaining in the aftertaste).

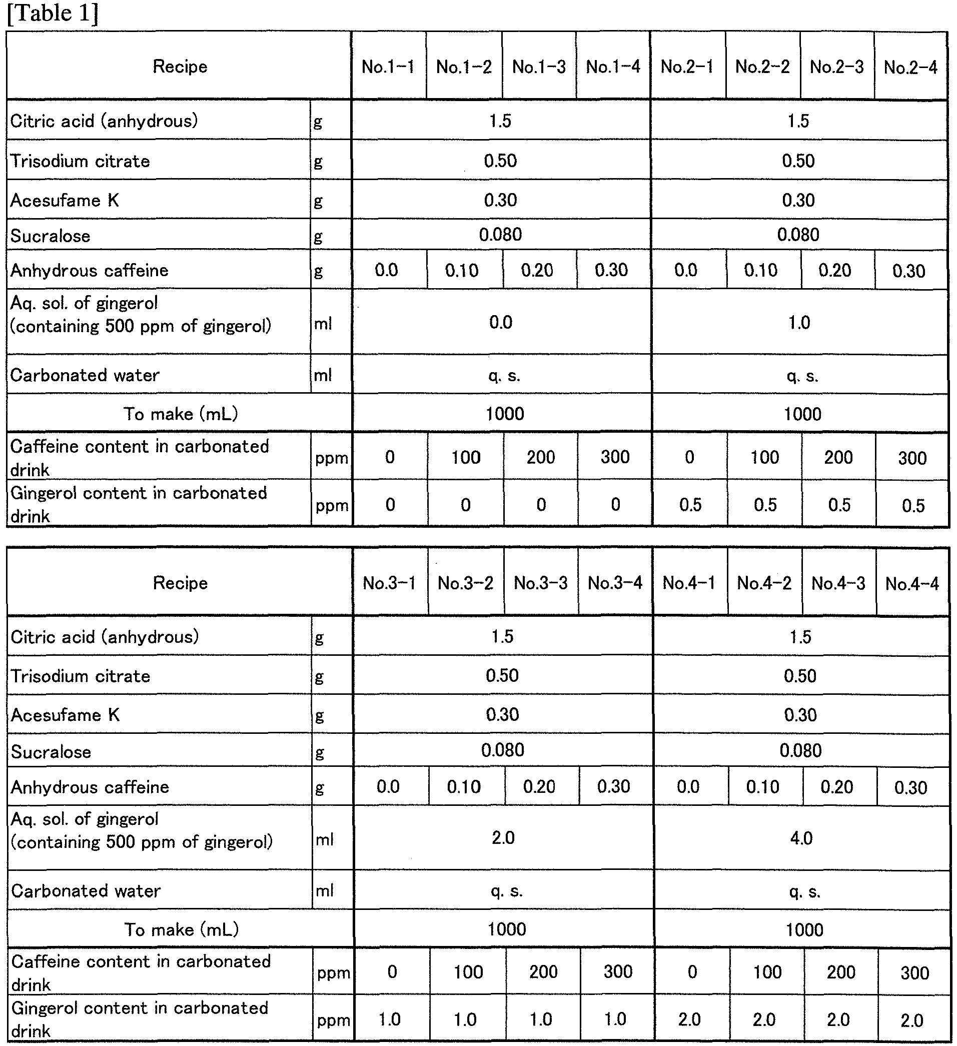

The results are shown in Table 2. As more caffeine was incorporated, the sharpness of aftertaste improved but, at the same time, the bitterness increased. When only gingerol was incorporated in the absence of caffeine, gingerol was perceived as "bitter"; however, it was suggested that when 1 ppm or more of gingerol was incorporated in carbonated drink containing 100 ppm or more of caffeine, the bitterness from the incorporated caffeine could be suppressed. Even when the bitterness was suppressed by incorporating 1 ppm or more of gingerol, the sharpness of aftertaste (dry feel) would remain the same or even improve.

**[Table 2]**

| | | Strength of bitterness | | | | Sharpness of aftertaste | | | |
|---|---|---|---|---|---|---|---|---|---|
| | | Gingerol (ppm) | | | | Gingerol (ppm) | | | |
| | | 0 | 0.5 | 1.0 | 2.0 | 0 | 0.5 | 1.0 | 2.0 |
| Caffeine (ppm) | 0 | 0 | 0 | 0.5 | 0.5 | 0 | 0 | 0.5 | 0.8 |
| | 100 | 1.5 | 1.5 | 1.2 | 1.0 | 1.5 | 1.5 | 2.0 | 2.3 |
| | 200 | 2.5 | 2.5 | 2.0 | 1.5 | 2.5 | 2.5 | 3.0 | 3.0 |
| | 300 | 3.0 | 3.0 | 2.5 | 2.2 | 3.0 | 3.0 | 3.0 | 3.0 |

### Example 2: Preparation of ginger extract-containing carbonated drink (1)

Ginger extract as obtained by extraction with supercritical carbon dioxide was incorporated to prepare a flavoring (ginger flavor). The gingerol content in the ginger flavor was 0.1%. One and a half gram of citric acid (anhydrous), 0.5 g of trisodium citrate, and high-intensity sweeteners (0.08 g of sucralose and 0.3 g of acesulfame K) were mixed and, after adding caffeine at five levels (0, 50, 150, 300, and 600 ppm) and the ginger flavor at four levels (0, 0.05, 0.10, and 0.30%), carbonated water of high gas pressure was further added to make a total of 1000 mL, thus preparing samples of non-caloric carbonated drink having a gas pressure of 343 kPa (3.5 kg/cm²)(as calculated for 20°C). The prepared samples of carbonated drink had a pH of 3.3 (as measured after degassing), with the degree of sweetness being 10.8. These samples were cooled to 5°C and evaluated by three professional panelists for the strength of bitterness, sharpness of aftertaste, and the refreshing feel as carbonated drink on the basis of a 5-point scoring system (0-5, with 5 indicating "strongest").

Table 3 shows the results for bitterness and the sharpness of aftertaste, and Table 4 shows the result for refreshing feel. By adding the ginger flavor containing gingerol, the sharpness of aftertaste (dry feel) was maintained or even improved, and yet the bitterness from the incorporated caffeine was reduced, and the refreshing feel as carbonated drink improved to give a highly palatable carbonated drink. When the ginger flavor was incorporated in unduly large amounts, its effect on the sharpness of aftertaste sometimes decreased.

**[Table 3]**

| | | Strength of bitterness | | | | Sharpness of aftertaste | | | |
|---|---|---|---|---|---|---|---|---|---|
| | | Ginger flavor (%) | | | | Ginger flavor (%) | | | |
| | | 0 | 0.05 | 0.10 | 0.30 | 0 | 0.05 | 0.10 | 0.30 |
| Caffeine (ppm) | 0 | 0 | 0.2 | 0.5 | 0.5 | 0 | 0.5 | 1.3 | 1.0 |
| | 50 | 1.0 | 0.8 | 1.0 | 1.3 | 1.0 | 1.8 | 2.3 | 1.8 |
| | 150 | 2.0 | 1.3 | 1.3 | 1.3 | 2.0 | 2.7 | 3.5 | 2.2 |
| | 300 | 3.0 | 1.8 | 1.7 | 1.8 | 3.0 | 3.0 | 3.5 | 2.4 |
| | 600 | 4.5 | 4.3 | 4.2 | 4.3 | 4.0 | 3.8 | 4.5 | 2.8 |

**[Table 4]**

| | | Ginger flavor (%) | | | |
|---|---|---|---|---|---|
| | | 0 | 0.05 | 0.10 | 0.30 |
| Caffeine (ppm) | 0 | 0 | 1.2 | 2.0 | 2.7 |
| | 50 | 1.0 | 2.3 | 2.3 | 3.0 |
| | 150 | 1.0 | 2.5 | 3.5 | 2.5 |
| | 300 | 2.0 | 3.2 | 4.0 | 3.0 |
| | 600 | 3.0 | 3.3 | 4.2 | 3.8 |

### Example 3: Preparation of ginger extract-containing carbonated drink (2)

Samples of non-caloric carbonated drink were prepared and subjected to sensory evaluation as in Example 1, except that caffeine was added in an amount of 100 ppm and the ginger flavor was added at six levels (0, 0.05, 0.10, 0.15, 0.20, and 0.30%). The results of the sensory evaluation are shown in Table 5. As in Example 2, the addition of the ginger flavor led to a decrease in bitterness and an improvement in the sharpness of aftertaste and the refreshing feel. The ginger flavor gave the most preferred result when it was incorporated in proportions of about 0.10 to 0.20% per 100 ppm of caffeine. By substituting these values into the expression of (B)/((A) + (B)) ((A) refers to the caffeine content and (B) the content of the ginger extract), the range of 0.909-0.952 is obtained. In this case, the content of gingerol in the carbonated drink was 1-2 ppm.

**[Table 5]**

| | Ginger flavor (%) | | | | | |
|---|---|---|---|---|---|---|
| | 0 | 0.05% | 0.10% | 0.15% | 0.20% | 0.30% |
| Bitterness | 1.8 | 1.3 | 1.3 | 1.0 | 1.0 | 1.5 |
| Sharpness of aftertaste | 1.2 | 2.2 | 3.0 | 2.9 | 2.8 | 2.3 |
| Refreshing feel | 1 | 2.3 | 3.3 | 3.6 | 4.8 | 3 |

### Example 4: Preparation of gingerol-containing carbonated drink (2)

According to the recipe indicated in Table 6, citric acid (anhydrous), trisodium citrate, erythritol, a stevia sweetener (REBAUDIO J-100 of Morita Kagaku Kogyo Co., Ltd.), and anhydrous caffeine were mixed and, after adding an aqueous solution of gingerol, carbonated water of high gas pressure was further added to prepare samples of carbonated drink having a pH of 3.3 (after degassing) and a gas pressure of 343 kPa (3.5 kg/cm²) (as calculated for 20°C). The gingerol content in the prepared samples of carbonated drink (Nos. 5 to 8) was 0. 0.5, 1.0, and 2.0 ppm. After being cooled to 5°C, the samples of carbonated drink were subjected to sensory evaluation by professional panelists as in Example 1.

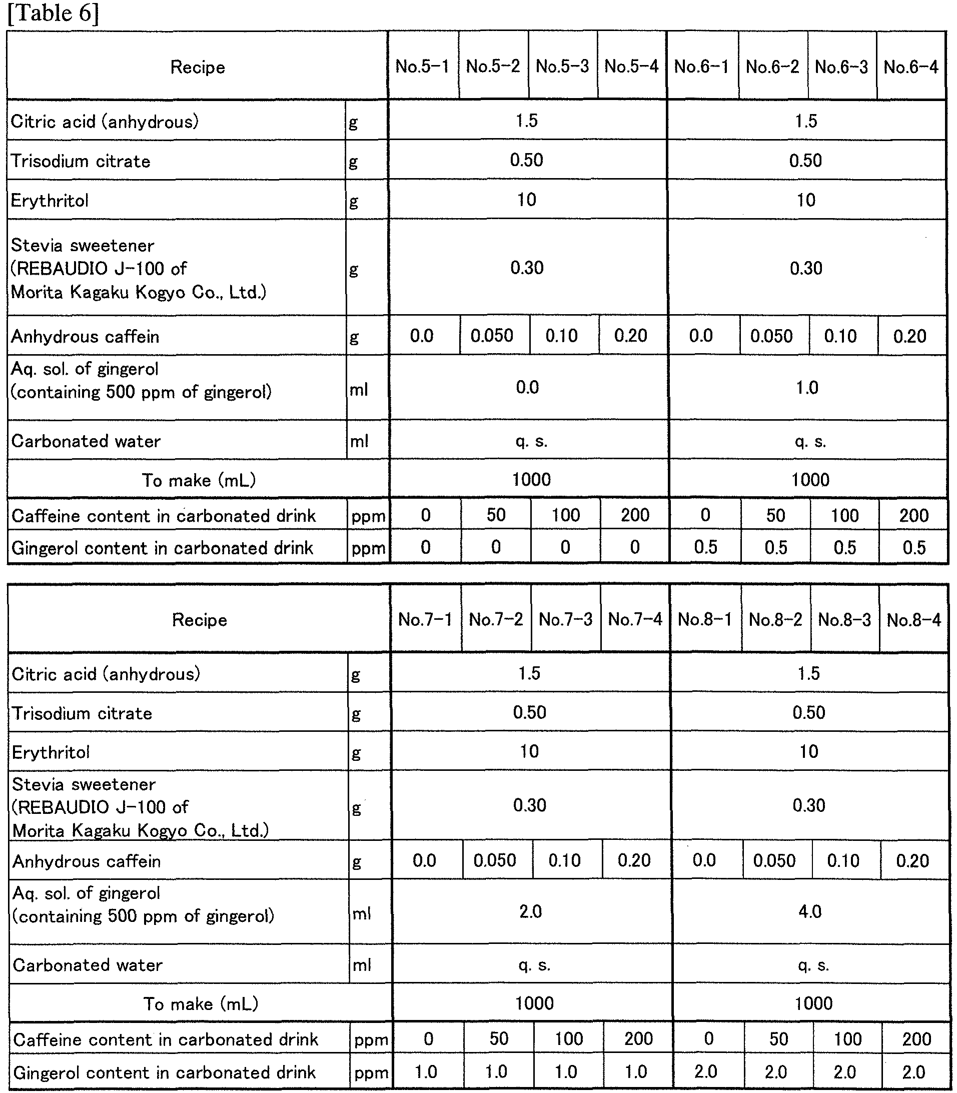

The results are shown in Table 7. As more caffeine was incorporated, the sharpness of aftertaste became improved but, at the same time, the bitterness increased. When only gingerol was incorporated in the absence of caffeine, gingerol was perceived as "bitter"; however, it was suggested that when 0.5 ppm or more of gingerol was incorporated in carbonated drink containing 50 ppm or more of caffeine, the bitterness from the incorporated caffeine amounts could be suppressed. Even when the bitterness was suppressed by incorporating 0.5 ppm or more of gingerol, the sharpness of aftertaste (dry feel) would remain the same or even improve.

**[Table 7]**

| | | Strength of bitterness | | | | Sharpness of aftertaste | | | |
|---|---|---|---|---|---|---|---|---|---|
| | | Gingerol (ppm) | | | | Gingerol (ppm) | | | |
| | | 0 | 0.5 | 1.0 | 2.0 | 0 | 0.5 | 1.0 | 2.0 |
| Caffeine (ppm) | 0 | 0 | 0.2 | 0.5 | 0.5 | 0 | 0.3 | 0.5 | 0.8 |
| | 50 | 1.3 | 1.0 | 0.7 | 0.5 | 0.5 | 0.8 | 1.5 | 2.0 |
| | 100 | 2.0 | 1.8 | 1.4 | 1.0 | 1.0 | 1.5 | 2.0 | 2.5 |
| | 200 | 2.5 | 2.3 | 2.0 | 1.5 | 1.3 | 2.0 | 2.5 | 2.8 |

## Claims

1. A carbonated drink having a calorie content of no more than 84 kJ (20 kcal) per 100 mL, which is obtained by incorporating the following components (A) and (B):
(A) caffeine in an amount of 0.005-0.06 wt%; and
(B) ginger extract in an amount of 0.00001-10 wt%, wherein component (B) contains at least gingerol and the content of gingerol in the carbonated drink ranges from 0.00001 to 0.002 wt%, and
wherein the carbonated drink has a gas pressure of 147-490 kPa (1.5-5.0 kg/cm²).

2. The carbonated drink according to claim 1, wherein the content of gingerol in the carbonated drink ranges from 0.00002 to 0.0005 wt%.

3. The carbonated drink according to claim 1 or 2, which further contains a high-intensity sweetener.

## Patentansprüche

1. Ein kohlensäurehaltiges Getränk mit einem Kaloriengehalt von nicht mehr als 84 kJ (20 kcal) pro 100 mL, das durch Einbringen der folgenden Komponenten (A) und (B) erhalten wird:
(A) Koffein in einer Menge von 0,005-0,06 Gew.-%; und
(B) Ingwerextrakt in einer Menge von 0,00001-10 Gew.-%, wobei die Komponente (B) mindestens Gingerol enthält und der Gingerolgehalt im kohlensäurehaltigen Getränk im Bereich von 0,00001 bis 0,002 Gew.-% liegt und
wobei das kohlensäurehaltige Getränk einen Gasdruck von 147-490 kPa (1,5-5,0 kg/cm²) aufweist.

2. Das kohlensäurehaltige Getränk gemäß Anspruch 1, wobei der Gingerolgehalt im kohlensäurehaltigen Getränk im Bereich von 0,00002 bis 0,0005 Gew.-% liegt.

3. Das kohlensäurehaltige Getränk gemäß Anspruch 1 oder 2, das ferner einen hochintensiven Süßstoff enthält.

## Revendications

1. Boisson gazeuse qui présente une teneur en calories qui est inférieure à 84 kJ (20 kcal) pour 100 ml, qui est obtenue en incorporant les composants suivants (A) et (B) :
(A) caféine en une quantité comprise entre 0,005 % en poids et 0,06 % en poids ; et
(B) de l'extrait de gingembre en une quantité comprise entre 0,00001 % en poids et 10% en poids, dans laquelle le composant (B) contient au moins du gingérol et la teneur en gingérol dans la boisson gazeuse se situe dans une plage comprise entre 0,00001 % en poids et 0,002 % en poids ; et
dans laquelle la pression du gaz dans la boisson gazeuse est comprise entre 147 kPa et 490 kPa (entre 1,5 kg / cm² et 5,0 kg/cm²).

2. Boisson gazeuse selon la revendication 1, dans laquelle la teneur en gingérol dans la boisson gazeuse se situe dans une plage comprise entre 0,00002 % en poids et 0,0005 % en poids.

3. Boisson gazeuse selon la revendication 1 ou la revendication 2, qui contient en outre un édulcorant à haute intensité.
